# FASCICULE DE BREVET EUROPEEN

(11) **EP 2 624 728 B1**
(45) Date de publication et mention de la délivrance du brevet: **03.08.2016**
(21) Numéro de dépôt: 11779799.3
(22) Date de dépôt: 05.10.2011
(51) Int. Cl.: A47J 27/08, A47J 27/09

(54) **APPAREIL DE CUISSON SOUS PRESSION A ORGANE DE COMMANDE DEBRAYABLE**
SCHNELLKOCHTOPF MIT ENTKUPPELBAREM STEUERELEMENT
PRESSURE COOKING APPLIANCE INCLUDING A DISENGAGEABLE CONTROL MEMBER

(30) Priorité: 06.10.2010 FR 1058103
(43) Date de publication de la demande: 14.08.2013
(73) Titulaire: SEB S.A., 69130 Ecully (FR)
(72) Inventeur: CHAMEROY, Eric, F-21260 Veronnes (FR); CHAILLARD, Hubert, F-52250 Longeau (FR)
(74) Mandataire: Weber, Jean-François
(86) Numéro de dépôt international: PCT/FR2011/052322
(87) Numéro de publication internationale: WO 2012/045979

(56) Documents cités:
- EP-A1- 2 100 544
- JP-A- 2006 006 583
- US-A1- 2005 132 896
- US-A1- 2008 210 690

## Description

### DOMAINE TECHNIQUE

La présente invention se rapporte au domaine technique général des appareils de cuisson sous pression, et en particulier des appareils domestiques du genre autocuiseurs, comprenant une cuve et un couvercle destiné à être verrouillé sur la cuve pour former une enceinte de cuisson sensiblement étanche, lesdits appareils étant destinés à assurer la cuisson sous pression de vapeur d'aliments contenus dans la cuve.

La présente invention concerne plus particulièrement un appareil de cuisson d'aliments sous pression comprenant :
- une cuve et un couvercle,
- un organe de commande du verrouillage/déverrouillage du couvercle relativement à la cuve, mobile entre une première et une deuxième position,
- et un moyen de sécurité à l'ouverture, susceptible d'occuper une position active dans laquelle il empêche le déverrouillage du couvercle,
ledit appareil étant conçu pour que lorsque le moyen de sécurité n'occupe pas sa position active, le passage dudit organe de commande de sa première à sa deuxième position entraîne le déverrouillage du couvercle.

### TECHNIQUE ANTERIEURE

On connaît déjà des appareils de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle et une position de déverrouillage. Un tel moyen de verrouillage 1 déverrouillage met par exemple en oeuvre une pluralité de mâchoires de verrouillage solidaires de bras entraîneurs disposés radialement sur le couvercle et dont le déplacement est commandé par un organe de commande monté sur le couvercle entre une première position correspondant au verrouillage et une deuxième position correspondant au déverrouillage.

L'utilisateur peut ainsi actionner l'organe de commande pour assurer, par l'intermédiaire d'un mécanisme de transmission interposé entre l'organe de commande et le moyen de verrouillage/déverrouillage, le déplacement radial des mâchoires soit en direction centrifuge, soit en direction centripète, pour positionner les mâchoires respectivement en position de déverrouillage ou en position de verrouillage. L'organe de commande du verrouillage / déverrouillage peut prendre différentes formes, et être par exemple constitué par un pommeau central monté à rotation sur le couvercle selon un axe de rotation perpendiculaire au plan moyen d'extension du couvercle, ou encore par une poignée de type anse ou levier monté à rotation sur le couvercle selon un axe de rotation sensiblement parallèle au plan moyen d'extension du couvercle. Le mécanisme de transmission interposé entre l'organe de commande et le moyen de verrouillage / déverrouillage peut assurer une simple transmission directe, au moyen de verrouillage / déverrouillage, de l'effort imparti par l'utilisateur à l'organe de commande pour déplacer ce dernier. Il existe également des appareils dont le mécanisme de transmission est conçu pour procurer une démultiplication de l'effort exercé par l'utilisateur sur l'organe de commande, afin de faciliter la tâche de l'utilisateur. Dans ce dernier cas, le mécanisme de transmission permet ainsi à la fois d'amplifier l'effort fourni par l'utilisateur pour déplacer l'organe de commande et de transformer cet effort en un effort de déplacement du moyen de verrouillage / déverrouillage.

Il est par ailleurs connu d'équiper de tels appareils de cuisson sous pression d'un moyen de sécurité à l'ouverture, susceptible d'occuper une position active dans laquelle il empêche le déverrouillage du couvercle tant que la pression régnant au sein de l'appareil égale ou excède un niveau prédéterminé de sécurité. Un tel moyen de sécurité à l'ouverture est classiquement constitué d'une tige manométrique de sécurité montée à coulissement vertical sur le couvercle entre une position basse de rappel et une position haute qu'elle atteint sous l'effet de l'atteinte du niveau de pression prédéterminé de sécurité. Cette tige manométrique est conçue pour interagir avec l'organe de commande afin d'empêcher tout déplacement de ce dernier vers sa deuxième position correspondant au déverrouillage. La tige manométrique de sécurité des autocuiseurs connus bloque ainsi mécaniquement l'organe de commande dans sa première position tant que le niveau de pression n'est pas redescendu à un niveau acceptable pour la sécurité de l'utilisateur.

Le document US-2005/0132896 A1 décrit un appareil de cuisson sous pression compotant un moyen de sécurité à l'ouverture.

De tels autocuiseurs de l'art antérieur, s'ils donnent globalement satisfaction, n'en présentent pas moins certains inconvénients.

En effet, rien n'interdit à l'utilisateur de tenter d'ouvrir de force l'autocuiseur en exerçant, par inconscience, ignorance ou inadvertance, un effort qui peut être très important sur l'organe de commande, alors que le déplacement de ce dernier est bloqué par la tige de sécurité en position haute. Un tel effort intempestif et excessif pourrait conduire à la casse de pièces formant le mécanisme de transmission ou à celle de la tige manométrique de sécurité, voire à une ouverture intempestive de l'appareil accompagné d'un échappement brutal du couvercle extrêmement dangereux pour l'utilisateur.

Afin de prévenir un tel risque, il est donc nécessaire (surtout pour les appareils procurant une démultiplication d'effort), de surdimensionner les pièces formant l'organe de commande, le mécanisme de transmission et le moyen de sécurité à l'ouverture, voire même de recourir à des matériaux métalliques pour fabriquer certaines de ces pièces, alors qu'une matière plastique conviendrait par ailleurs parfaitement. Ces contraintes de sécurité compliquent donc la conception des autocuiseurs de l'art antérieur, et en augmentent le coût de fabrication ainsi que le poids.

De plus, en dépit de toutes ces précautions de conception, il subsiste toujours un risque, certes marginal, que l'utilisateur provoque malgré tout la casse d'une pièce en exerçant un effort excessif d'ouverture sur l'organe de commande, alors que ce dernier est bloqué dans sa première position par la tige de sécurité.

### EXPOSE DE L'INVENTION

Les objets assignés à l'invention visent par conséquent à porter remède aux différents inconvénients énumérés précédemment et à proposer un nouvel appareil de cuisson d'aliments sous pression qui, tout en étant particulièrement sûr à utiliser, est de construction extrêmement simple, légère et bon marché.

Un autre objet de l'invention vise à proposer un nouvel appareil de cuisson d'aliments sous pression particulièrement pratique à utiliser.

Un autre objet de l'invention vise à proposer un nouvel appareil de cuisson d'aliments sous pression dont la conception autorise une démultiplication importante de l'effort que doit exercer l'utilisateur pour verrouiller et/ou déverrouiller le couvercle, sans pour autant dégrader la fiabilité, la sécurité, le poids et le coût de revient de l'appareil.

Un autre objet de l'invention vise à proposer un nouvel appareil de cuisson d'aliments sous pression dont la construction, tout en étant particulièrement simple, fait sensiblement disparaître tout risque de rupture d'une pièce par suite d'une mauvaise manipulation d'ouverture de l'utilisateur.

Un autre objet de l'invention vise à proposer un nouvel appareil de cuisson d'aliments sous pression dont l'organe de commande du verrouillage / déverrouillage et les moyens de sécurité à l'ouverture peuvent être réalisés dans des matériaux standards et bons marchés.

Un autre objet de l'invention vise à proposer un nouvel appareil de cuisson d'aliments sous pression dont la conception permet à l'utilisateur de percevoir, lorsqu'il force intempestivement sur l'organe de commande afin de déverrouiller le couvercle alors que le moyen de sécurité à l'ouverture interdit un tel déverrouillage, qu'il est en train d'effectuer une mauvaise manipulation.

Un autre objet de l'invention vise à proposer un nouvel appareil de cuisson d'aliments sous pression dont la fiabilité et la sécurité d'utilisation sont optimisées.

Les objets assignés à l'invention sont atteints à l'aide d'un appareil de cuisson d'aliments sous pression comprenant :
- une cuve et un couvercle,
- un organe de commande du verrouillage/déverrouillage du couvercle relativement à la cuve, mobile entre une première et une deuxième position,
- et un moyen de sécurité à l'ouverture, susceptible d'occuper une position active dans laquelle il empêche le déverrouillage du couvercle,
ledit appareil étant conçu pour que lorsque le moyen de sécurité à l'ouverture n'occupe pas sa position active, le passage dudit organe de commande de sa première à sa deuxième position entraîne le déverrouillage du couvercle, ledit appareil étant caractérisé en ce que l'organe de commande est débrayable, de façon que lorsque le moyen de sécurité à l'ouverture occupe sa position active, l'organe de commande peut passer de sa première à sa deuxième position sans entraîner le déverrouillage du couvercle.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :
- La figure 1 illustre, selon une vue générale en perspective, un appareil de cuisson d'aliments sous pression conforme à l'invention avec son organe de commande dans sa première position.
- La figure 2 illustre, selon une vue en perspective, un détail de réalisation du couvercle de l'appareil de la figure 1.
- La figure 3 illustre, selon une vue générale en perspective, l'appareil de cuisson de la figure 1 avec son organe de commande dans sa deuxième position.
- La figure 4 illustre, selon une vue partielle en coupe, un détail de réalisation de l'organe de commande 6 alors qu'il se trouve dans sa première position et que son moyen de sécurité à l'ouverture occupe sa position active.
- La figure 5 est identique à la figure 4 à la différence près que le moyen de sécurité à l'ouverture n'occupe pas sa position active.
- La figure 6 illustre, selon une vue en perspective, un détail de réalisation de l'organe de commande du verrouillage / déverrouillage alors que ce dernier occupe sa deuxième position et que le moyen de sécurité à l'ouverture n'occupe pas sa position active.
- La figure 7 est une vue de détail agrandie de la figure 6.
- La figure 8 est identique à la figure 6 à la différence près que le moyen de sécurité à l'ouverture occupe cette fois sa position active.
- La figure 9 est une vue de détail agrandie de la figure 8.
- La figure 10 illustre, selon une vue en coupe, un détail de la figure 8.
- La figure 11 est une vue agrandie d'un détail de la figure 10.
- La figure 12 illustre, selon une vue générale en perspective, un détail de réalisation de l'organe de commande 6 constitué en l'occurrence par une première pièce de transmission mobile et une deuxième pièce de transmission mobile entre lesquelles est interposée une pièce élastique, constituée en l'espèce par un ressort.

### MEILLEURE MANIERE DE REALISER L'INVENTION

L'appareil 1 de cuisson d'aliments sous pression conforme à l'invention est destiné à assurer la cuisson de différents aliments à un niveau de pression supérieur à la pression atmosphérique, de préférence dans un contexte domestique, étant entendu que l'invention peut également concerner des appareils professionnels ou semi-professionnels. L'appareil 1 conforme à l'invention est donc avantageusement un ustensile de cuisine présentant un caractère portatif (c'est-à-dire qu'il peut être déplacé manuellement) et indépendant. De façon classique, l'appareil 1 conforme à l'invention est avantageusement conçu pour monter en pression exclusivement sous l'effet d'une source de chauffe (embarqué ou externe), sans apport de pression externe. De façon particulièrement préférentielle, l'appareil 1 de cuisson conforme à l'invention est un autocuiseur.

De façon classique, l'appareil 1 de cuisson sous pression conforme à l'invention comprend une cuve 2 formant récipient de cuisson et présentant avantageusement sensiblement une symétrie de révolution selon un axe X-X'. Par la suite, l'adjectif *« axial »* se réfèrera à la direction de cet axe de symétrie X-X', direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable, et est par exemple pourvu d'un fond thermo-conducteur 2A solidarisé à la cuve par toute technique appropriée (par exemple par frappe à chaud).

La cuve 2 peut comporter également des organes de préhension, tel que des poignées 2B, 2C préférentiellement au nombre de deux, et fixées sur la paroi latérale 2D de la cuve de façon diamétralement opposée par exemple.

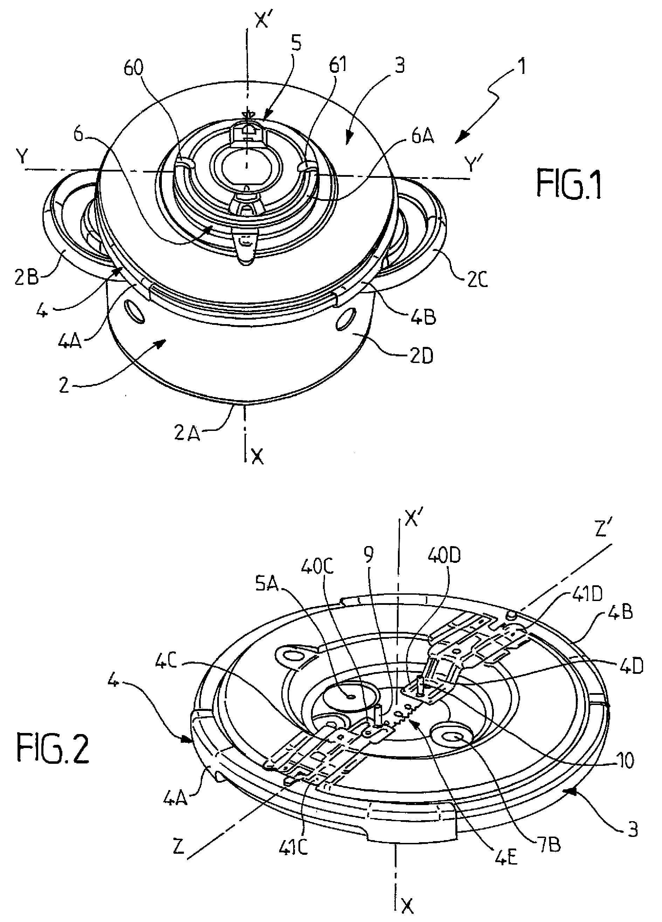

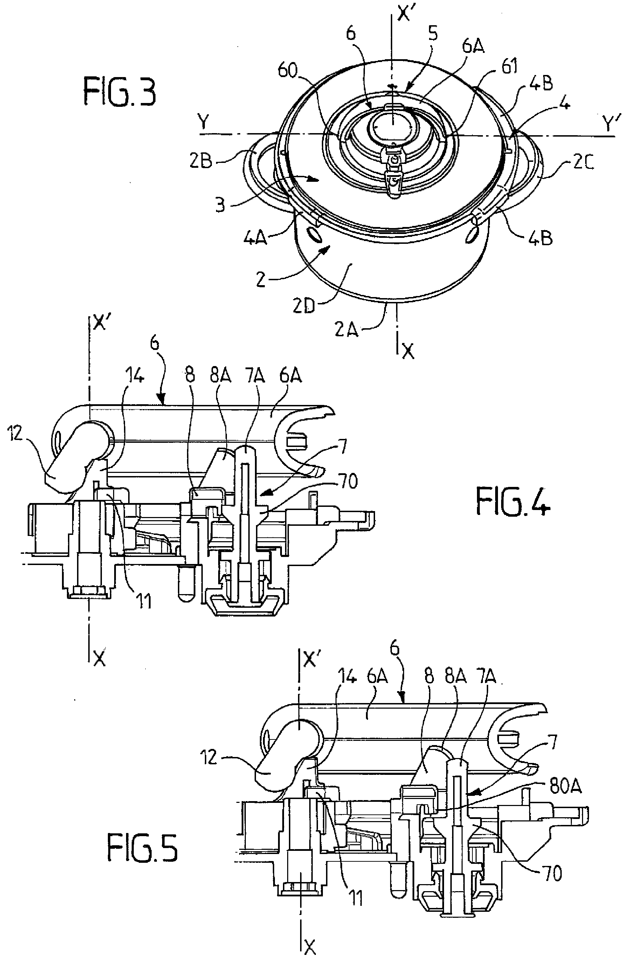

L'appareil 1 conforme à l'invention comprend également un couvercle 3 destiné à être associé à la cuve 2 pour former avec cette dernière une enceinte de cuisson sensiblement étanche, c'est-à-dire suffisamment hermétique pour permettre une montée en pression de l'appareil 1. Le couvercle 3 est avantageusement de forme générale discoïde, et s'étend avantageusement dans un plan moyen sensiblement parallèle au plan moyen d'extension du fond 2A de la cuve 2 lorsqu'il est rapporté et verrouillé sur cette dernière. Le couvercle 3 est destiné à être verrouillé (pour permettre la montée en pression de l'enceinte, un joint d'étanchéité étant interposé entre le couvercle 3 et la cuve 2) ou déverrouillé (pour accéder à l'intérieur de la cuve 2). A cet effet, le couvercle 3 comprend avantageusement un moyen de verrouillage / déverrouillage 4 du couvercle 3 relativement à la cuve 2. Le moyen de verrouillage / déverrouillage 4 peut être de tout type connu de l'homme du métier, et est de façon classique susceptible d'évoluer entre une position de verrouillage du couvercle 3 relativement à la cuve 2, dans laquelle le couvercle 3 est solidarisé à la cuve 2 (figure 1), et une position de déverrouillage du couvercle 3 relativement à la cuve 2, dans laquelle le couvercle 3 peut être librement séparé de la cuve 2 (figure 3). De préférence et comme illustré aux figures, le moyen de verrouillage/déverrouillage 4 est monté mobile, de préférence en translation, sur le couvercle 3 entre sa position de verrouillage du couvercle 3 relativement à la cuve 2 et sa position de déverrouillage du couvercle 3 relativement à la cuve 2. A titre d'exemple d'un tel moyen de verrouillage / déverrouillage 4 utilisable dans le cadre de l'invention, on peut citer un moyen de verrouillage / déverrouillage 4 à mâchoires ou à segments, étant entendu que l'invention n'est nullement limitée à un type particulier de moyen de verrouillage / déverrouillage. Dans la variante préférentielle illustrée aux figures, le moyen de verrouillage / déverrouillage 4 du couvercle 3 relativement à la cuve 2 comprend deux mâchoires 4A, 4B montées mobiles en translation radiale sur et relativement au couvercle 3 par l'intermédiaire de bras entraîneurs correspondants 4C, 4D s'étendant de façon diamétralement opposée en regard de l'axe de symétrie général X-X' de l'appareil 1. Les mâchoires 4A, 4B sont ainsi montées, par l'intermédiaire des bras entraîneurs 4C, 4D, entre d'une part une position de verrouillage (illustrée à la figure 1) dans laquelle chaque mâchoire 4A, 4B enserre le couvercle 3 et le bord supérieur roulé de la cuve 2 et d'autre part une position de déverrouillage (illustrée à la figure 3), obtenue par déplacement centrifuge des mâchoires 4A, 4B à partir de leur position de verrouillage, et dans laquelle les mâchoires 4A, 4B ne sont plus en prise avec le bord roulé de la cuve 2, ce qui permet à l'utilisateur de désolidariser librement le couvercle 3 de la cuve 2. De préférence, la position de verrouillage est une position de rappel, un tel effet de rappel étant obtenu par exemple grâce à l'interposition d'un ressort 4E reliant les bras entraîneurs 4C, 4D et rappelant ces derniers l'un vers l'autre (cf. figure 2). Chaque bras entraîneur 4C, 4D s'étend plus précisément entre une extrémité intérieure destinée à coopérer avec un organe de commande 6 du verrouillage / déverrouillage (qui sera décrit plus en détails ci-après) et une extrémité extérieure qui porte la mâchoire correspondante 4A, 4B. Chaque mâchoire 4A, 4B se présente quant à elle avantageusement sous la forme d'une plaque métallique profilée en U, tel que cela est bien connu de l'homme du métier. Il est cependant tout à fait envisageable que l'extrémité extérieure de chaque segment 4C, 4D ne porte pas de mâchoire et soit simplement destinée à pénétrer dans des lumières correspondantes ménagées dans la cuve, à la manière d'un système pêne/gâche. Un tel système de verrouillage de type pêne/gâche (non illustré), habituellement désigné sous l'appellation « *système de verrouillage à segments* », est bien connu en tant que tel, de sorte qu'il n'est pas nécessaire de le décrire plus avant. L'appareil 1 de cuisson d'aliments sous pression conforme à l'invention comprend par ailleurs avantageusement un moyen de régulation de pression 5 (telle qu'une soupape à poids ou à ressort) monté en communication étanche avec un perçage 5A correspondant ménagé dans le couvercle 3 et agencé pour maintenir la pression relative (c'est-à-dire la pression mesurée au-dessus de la pression atmosphérique) régnant dans l'enceinte à une valeur prédéterminée sensiblement constante, dite pression de fonctionnement et par exemple comprise dans une plage s'étendant sensiblement entre 10 et 90 kPa. Le principe de fonctionnement général d'un tel moyen de régulation est bien connu de l'homme du métier, de sorte qu'il n'est pas nécessaire de le décrire plus avant ici.

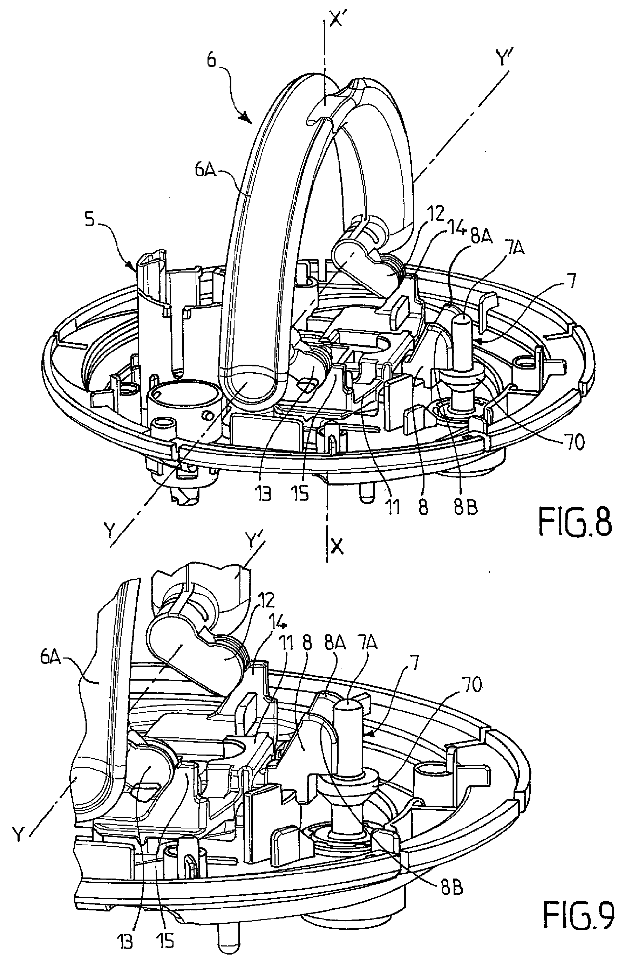

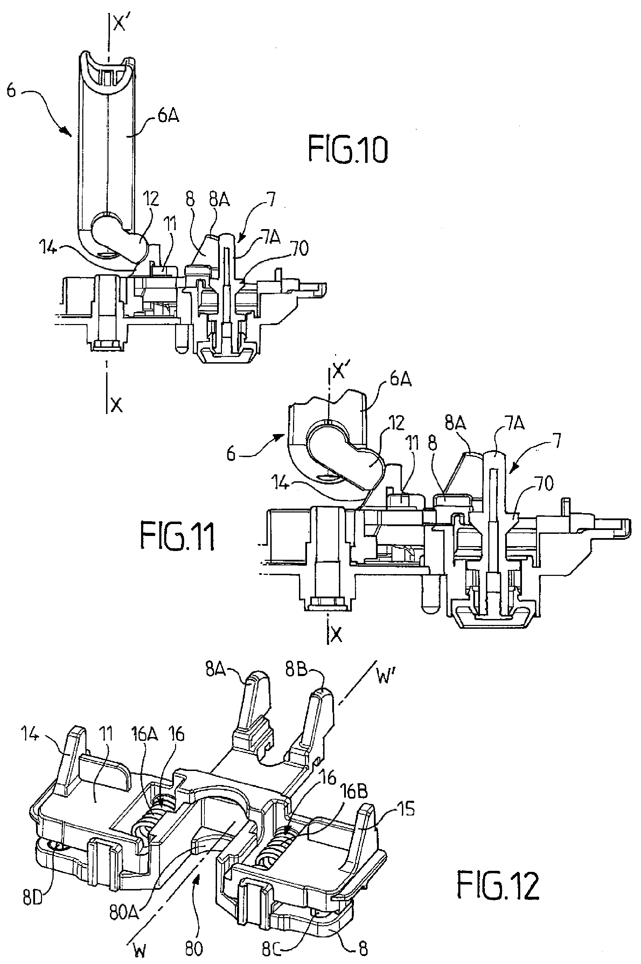

Comme évoqué précédemment, l'appareil de cuisson d'aliments 1 conforme à l'invention comprend également un organe de commande 6 du verrouillage / déverrouillage du couvercle 3 relativement à la cuve 2. L'organe de commande 6 est avantageusement conçu pour être manipulé, de préférence directement, par l'utilisateur de façon à permettre à ce dernier de contrôler manuellement le moyen de verrouillage / déverrouillage 4, et de préférence le déplacement radial des bras entraîneurs 4C, 4D et des mâchoires correspondantes 4A, 4B. A cette fin, l'organe de commande 6 du verrouillage / déverrouillage du couvercle 3 relativement à la cuve 2 est mobile entre une première position (illustrée aux figures 1, 4 et 5) et une deuxième position (illustrée aux figures 3 et 6 à 11), lesdites première et deuxième positions étant préférentiellement distinctes, et encore plus préférentiellement séparées par un secteur angulaire.

Conformément au mode de réalisation illustré aux figures, l'organe de commande 6 du verrouillage / déverrouillage du couvercle 3 relativement à la cuve 2 est mobile relativement au couvercle 3. Dans l'exemple illustré aux figures, l'organe de commande 6 de verrouillage/déverrouillage du couvercle 3 relativement à la cuve 2 comprend une poignée 6A, présentant en l'espèce avantageusement une forme d'anse hémicirculaire, conçue pour être saisie et manipulée à la main par l'utilisateur. Dans ce mode de réalisation préférentiel, la première position correspond à une position rétractée, dans laquelle la poignée 6A est rabattue sur le couvercle 3, tandis que la deuxième position est une position déployée dans laquelle la poignée 6A fait saillie du couvercle 3. La poignée 6A est ainsi déplaçable manuellement entre lesdites première et deuxième positions. A cet effet, la poignée 6A est avantageusement montée mobile à rotation sur le couvercle 3, selon un axe de pivotement Y-Y' qui est de préférence sensiblement perpendiculaire à l'axe vertical X-X'. La poignée 6A est dans ce cas avantageusement conçue pour parcourir une course angulaire d'environ 90° entre une position rabattue, correspondant à la première position de l'organe de commande 6 et une position déployée, correspondant à la deuxième position de l'organe de commande 6. Avantageusement, afin de permettre une manipulation équilibrée du couvercle 3 et simplifier la conception globale de l'appareil 1, l'organe de commande 6 est centré sur le couvercle 3, de sorte que dans ce cas, l'axe de pivotement Y-Y' est avantageusement sécant avec l'axe X-X' correspondant à la direction verticale.

Comme illustré aux figures, l'appareil 1 de cuisson d'aliments sous pression comprend par ailleurs un moyen de sécurité à l'ouverture 7, c'est à dire un moyen conçu pour autoriser le déverrouillage du couvercle 2 relativement à la cuve 1 uniquement lorsque le niveau de pression et / ou de température régnant dans l'enceinte de cuisson formée par la cuve 2 et le couvercle 3 atteint un niveau acceptable du point de vue de la sécurité de l'utilisateur, de manière à prévenir tout risque d'échappement brutal du couvercle et / ou de soumission de l'utilisateur à des projections brûlantes de vapeur ou d'aliments. Le moyen de sécurité à l'ouverture 7 est ainsi susceptible d'occuper une position active (visible notamment aux figures 4 et 8 à 11) dans laquelle il empêche le déverrouillage du couvercle 3. Avantageusement, le moyen de sécurité à l'ouverture 7 reste étanche lorsqu'il occupe sa position active, de sorte qu'il ne se produit pas de dépressurisation de l'appareil 1. De préférence, le moyen de sécurité à l'ouverture 7 est conçu pour répondre au niveau de pression régnant dans l'enceinte formée par la cuve 2 et le couvercle 3, c'est à dire que le moyen de sécurité à l'ouverture 7 est sensible à la pression. Bien entendu, de façon alternative ou cumulative, le moyen de sécurité à l'ouverture pourrait également être sensible à un autre paramètre physique relié à la sécurité de l'utilisateur, comme par exemple la température. En définitive, le moyen de sécurité à l'ouverture 7 est avantageusement sensible à la pression et/ou à la température. Dans le cas illustré aux figures, la position instantanée du moyen de sécurité à l'ouverture 7 dépend du niveau de pression régnant dans l'enceinte, de sorte que le moyen de sécurité à l'ouverture 7 occupe sa position active lorsque la pression dans l'enceinte excède un niveau prédéterminé de sécurité. Le niveau prédéterminé de sécurité peut par exemple être compris dans une plage s'étendant entre 1 et 4 kPa au-dessus de la pression atmosphérique, tel que cela est bien connu dans le domaine. De préférence, et conformément au mode de réalisation illustré aux figures, le moyen de sécurité à l'ouverture 7 est mobile, sous l'effet de la pression régnant dans l'enceinte, entre sa position active (qui est avantageusement une position haute de butée) dans laquelle il empêche le déverrouillage du couvercle 3 et une position inactive (illustrée aux figures 5 à 10), qui forme avantageusement une position basse de butée dans laquelle le moyen de sécurité à l'ouverture 7 autorise le déverrouillage du couvercle 3 relativement à la cuve 2, c'est à dire permet le déplacement en translation radiale des bras entraîneurs 4C, 4D des mâchoires correspondantes 4A, 4B vers leur position de déverrouillage à partir de leur position de verrouillage. Un tel moyen de sécurité à l'ouverture est bien connu en tant que tel, de sorte qu'il n'est pas utile d'en décrire le principe général plus avant.

De préférence, le moyen de sécurité à l'ouverture 7 comprend un doigt de sécurité 7A monté à coulissement vertical, selon un axe de coulissement sensiblement parallèle à l'axe vertical X-X' relativement au couvercle 3.

Le doigt de sécurité 7A est monté en communication étanche avec un orifice 7B correspondant ménagé à travers le couvercle 3, de façon à ce que la pression régnant dans l'enceinte formée par la cuve 2 et le couvercle 3 vienne exercer un effort de poussée verticale sur le doigt de sécurité 7A et le maintienne dans sa position active dès que le niveau de pression dans l'enceinte excède le niveau prédéterminé de sécurité susvisé.

Ainsi, le moyen de sécurité à l'ouverture 7 comprend avantageusement un doigt de sécurité 7A monté mobile sur le couvercle 3 entre une position haute correspondant à la position active et une position basse de rappel (par exemple sous l'effet du poids du doigt 7A ou d'une force de rappel extérieure, exercée par exemple par un ressort), ledit doit 7A étant conçu pour rester dans sa position haute dès que la pression régnant au sein de l'appareil 1 atteint un niveau prédéterminé, et pour retomber dans sa position basse dès que le niveau de pression chute au-dessous du niveau de sécurité prédéterminé. Avantageusement, le doigt de sécurité 7A est réalisé en un matériau relativement léger, de préférence une matière plastique, afin de pouvoir regagner sa position active dès que la pression excède un niveau prédéterminé relativement bas (n'excédant de préférence pas 4 kPa).

L'appareil 1 est par ailleurs conçu pour que lorsque le moyen de sécurité 7 n'occupe pas sa position active, le passage de l'organe de commande 6 de sa première à sa deuxième position entraîne le déverrouillage du couvercle 3. En d'autres termes, le moyen de sécurité 7 autorise, lorsqu'il n'occupe pas sa position active (et qu'il se trouve par exemple dans sa position basse inactive illustrée notamment à la figure 5), l'utilisateur à déverrouiller le couvercle 3 en déplaçant (en l'espèce manuellement) l'organe de commande 6 de sa première vers sa deuxième position. Bien entendu, l'organe de commande 6 du verrouillage / déverrouillage comprend lui-même un mécanisme de transmission pour transformer le mouvement de la poignée 6A en mouvement du moyen de verrouillage / déverrouillage 4. Le mécanisme de transmission peut être de tout type connu. De préférence, conformément à l'exemple illustré aux figures, le mécanisme de transmission est conçu pour transformer le mouvement rotatif de la poignée 6A selon l'axe de pivotement Y-Y' en mouvement de translation radiale des bras entraineurs 4C, 4D et des mâchoires correspondantes 4A, 4B qui leurs sont attachés selon l'axe Z-Z', lequel est avantageusement parallèle à l'axe Y-Y' et sécant lui aussi avec l'axe X-X'.

L'organe de commande 6 est en outre débrayable, de façon à ce que lorsque le moyen de sécurité à l'ouverture 7 occupe sa position active, l'organe de commande 6 peut passer de sa première à sa deuxième position sans entraîner le déverrouillage du couvercle 3.

Dans le mode de réalisation illustré aux figures, le caractère débrayable de l'organe de commande 6 autorise ainsi l'utilisateur, alors même que le moyen de sécurité à l'ouverture 7 occupe sa position active interdisant le déverrouillage du couvercle 3, à déplacer la poignée 6A de sa position rabattue à sa position déployée sans pour autant entraîner le déverrouillage du couvercle 3 relativement à la cuve, alors qu'un tel déplacement de la poignée 6A lorsque le moyen de sécurité 7 n'occupe pas sa position active commande le déverrouillage du couvercle 3. Grâce à cette mesure technique, l'utilisateur pourra emmener l'organe de commande 6 jusque dans sa deuxième position correspondant normalement au déverrouillage, même lorsque le niveau de pression régnant dans l'enceinte de cuisson interdit, par l'intermédiaire du moyen de sécurité à l'ouverture 7, un tel déverrouillage. Dans l'art antérieur, l'organe de commande 6 était au contraire bloqué dans sa première position par le moyen de sécurité à l'ouverture lorsque ce dernier occupait sa position active, de sorte que toute tentative de l'utilisateur d'emmener de force l'organe de commande dans sa deuxième position générait l'exercice d'un effort mécanique conséquent (surtout en présence d'un effet de levier, lorsque l'organe de commande est rotatif) sur le moyen de sécurité à l'ouverture susceptible d'entraîner la rupture de ce dernier.

Au contraire, l'invention permet, du fait du caractère débrayable de l'organe de commande 6, que ce dernier puisse passer librement de sa première à sa deuxième position même lorsque le moyen de sécurité 7 occupe sa position active, ce qui empêche d'exercer des efforts mécaniques intempestifs sur le moyen de sécurité à l'ouverture 7.

De préférence, l'organe de commande 6 est débrayable automatiquement, c'est à dire sans intervention distincte et positive de l'utilisateur, autre qu'une tentative intempestive de déverrouillage du couvercle 3 alors que le niveau de pression dans l'appareil est encore trop élevé (*i*.*e* supérieur au niveau prédéterminé de sécurité).

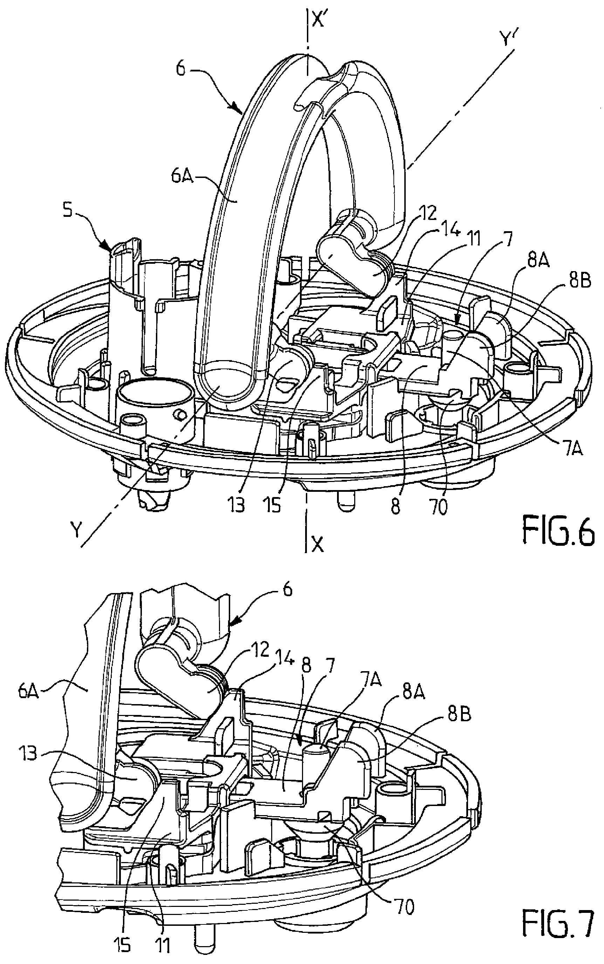

Avantageusement, le mécanisme de transmission destiné à transformer le mouvement de la poignée 6A en mouvement du moyen de verrouillage / déverrouillage 4 comprend une première pièce de transmission 8 mobile conçue pour commander le déplacement du moyen de verrouillage / déverrouillage 4. Avantageusement, la première pièce de transmission 8 est mobile entre des positions de fermeture (illustrées aux figures 4, 5 et 8 à 11) et d'ouverture (illustrées aux figures 6 et 7) correspondant respectivement aux positions de verrouillage et de déverrouillage du moyen de verrouillage / déverrouillage 4. De préférence, conformément à l'exemple illustré aux figures, la première pièce de transmission 8 est montée mobile à translation sur le couvercle 3, avantageusement selon un axe de translation W-W' perpendiculaire à la fois à l'axe central vertical X-X' et à l'axe de pivotement Y-Y' et avantageusement sécant avec ledit axe X-X'.

Le déplacement de la première pièce de transmission 8 est avantageusement régi par le déplacement de l'organe de commande 6, et en l'espèce par le déplacement de la poignée 6A. De préférence, la position d'ouverture de la première pièce de transmission 8 est une position de rappel, dans laquelle la première pièce de transmission 8 est rappelée en permanence, sous l'effet par exemple d'un ressort monté entre le couvercle 3 et la première prise de transmission 8. La première pièce de transmission 8 est par ailleurs conçue pour être automatiquement immobilisée dans sa position d'ouverture, de sorte que la première pièce de transmission 8 demeure maintenue dans sa position d'ouverture, à l'encontre de la force de rappel tendant à la ramener dans sa position de fermeture. La première pièce de transmission 8 est par ailleurs avantageusement pourvue d'une gâchette formée de deux nervures arrondie 8A et 8B. Cette gâchette coopère avec la poignée 6A de la manière suivante : dès que la poignée 6A approche de sa position rabattue à partir de sa position déployée, elle vient appuyer sur ladite gâchette (c'est-à-dire sur les nervures 8A, 8B) ce qui a pour effet de repousser, par un effet de came, la première pièce de transmission 8 hors de sa position d'ouverture vers sa position de fermeture selon l'axe de translation W-W'. La première pièce de transmission 8 quitte alors sa position de fermeture (qui est une position d'équilibre instable) de sorte que sous l'effet de l'action de la force de rappel elle est ramenée automatiquement jusque dans sa position de fermeture.

La première pièce de transmission 8 coopère par ailleurs avec le moyen de verrouillage / déverrouillage 4 pour en commander le déplacement. A cette fin, la première pièce de transmission 8 est par exemple avantageusement pourvue de lumières 8C, 8D qui s'étendent de façon oblique et symétrique par rapport à l'axe de translation W-W'. Lesdites lumières obliques 8C, 8D coopèrent avec des ergots 9, 10 reliés respectivement aux bras entraîneurs 4C, 4D vers les extrémités intérieures de ces derniers. Ainsi, le déplacement en translation de la première pièce de transmission 8 entraîne, par l'intermédiaire des lumières 8C, 8D, le déplacement radial des ergots 9, 10 et donc des bras entraîneurs 4C, 4D auxquels ces derniers sont respectivement attachés. Un tel principe de commande du déplacement radial des bras entraîneurs 4C, 4D est bien connu en tant que tel, et est par exemple décrit dans le document FR-2863849A1 dont le contenu est incorporé par référence. D'ailleurs, la force de rappel qui sollicite en permanence la première pièce de transmission 8 pour la ramener dans sa position de fermeture est avantageusement exercée par le ressort 4E, par l'intermédiaire des ergots 9, 10. Ceci n'exclut pas de recourir à des moyens alternatifs ou complémentaires, se présentant par exemple sous la forme de ressorts exerçant directement leur action de rappel selon l'axe W-W'.

La première pièce de transmission 8 coopère par ailleurs avantageusement avec le moyen de sécurité à l'ouverture 7 de façon à ce que dernier s'oppose, lorsqu'il occupe sa position active, à l'atteinte par la première pièce de transmission 8 de sa position d'ouverture à partir de sa position de fermeture. A cette fin, le doigt de sécurité 7A est avantageusement pourvu d'une collerette 70 tandis que la première pièce de transmission 8 présente une échancrure 80 dont le bord 80A est destinée à venir en butée contre le bord latéral de la collerette 70 lorsque le doigt de sécurité se trouve en position haute (correspondant à la position active). Dans ce cas, la course en translation de la première pièce de transmission 8 est bloquée par la collerette 70 qui se trouve sur la trajectoire du bord 80A. A l'inverse, lorsque le doigt de sécurité 7A se trouve dans sa position basse (illustré aux figures 5 à 7), la collerette 70 n'interfère plus avec la trajectoire du bord 80A et la première pièce de transmission 8 peut coulisser librement jusqu'à sa position d'ouverture.

Avantageusement, le mécanisme de transmission pour transformer le mouvement de la poignée 6A en mouvement du moyen de verrouillage / déverrouillage 4 comprend également une deuxième pièce de transmission 11 mobile dont le déplacement est commandé, de préférence directement, par le déplacement de la poignée 6A. La deuxième pièce de transmission 11 est avantageusement distincte et indépendante de la première pièce de transmission 8, même si elle interagit avec cette dernière comme cela va être décrit plus en détails dans ce qui suit. Avantageusement, comme illustré aux figures, la deuxième pièce de transmission 11 est montée mobile à translation sur le couvercle 3, de préférence selon le même axe de translation W-W' que la première pièce de transmission 8. Il est cependant tout à fait envisageable que seule la première pièce de transmission 8 soit montée mobile à translation, ou à l'inverse que seule la deuxième pièce de transmission 11 soit montée mobile à translation sur le couvercle 3. Par conséquent, l'invention concerne un appareil 1 dans lequel, selon un mode avantageux, la première et/ou la deuxième pièce de transmission 8, 11 est (sont) monté(es) mobile(s) à translation sur le couvercle 3. Par ailleurs, la deuxième pièce de transmission 11 coopère avantageusement avec la poignée 6A et la première pièce de transmission 8 de façon que lorsque le moyen de sécurité à l'ouverture 7 occupe sa position active, le déplacement de la poignée 6A de sa première vers sa deuxième position entraîne un déplacement de la deuxième pièce de transmission 11 relativement à la première pièce de transmission 8, cette dernière restant avantageusement sensiblement immobile relativement au couvercle 3. A cet effet, la poignée 6A est avantageusement pourvue de cames 12, 13 disposées respectivement à chacune des extrémités 60, 61 des extrémités de la poignée 6A, lesdites cames tournant ainsi avec la poignée 6A autour de l'axe de pivotement Y-Y'. La deuxième pièce de transmission 11 comprend quant à elle avantageusement des suiveurs de came 14, 15 se présentant sous la forme de pans inclinés qui viennent en appui simple contre la came correspondante 12, 13. Ainsi, lorsque la poignée 6A pivote autour de l'axe Y-Y' de sa première vers sa deuxième position, elle repousse, grâce à l'interaction entre les cames 12, 13 et les suiveurs de came correspondants 14, 15, la deuxième pièce de transmission 11 qui coulisse alors selon l'axe W-W' relativement au couvercle 3 et à la première pièce de transmission 8 (laquelle reste immobile), jusqu'à les bloquer par le moyen de sécurité 7 qui occupe sa position active.

Avantageusement, l'appareil 1 est également conçu pour que lorsque le moyen de sécurité 7 n'occupe pas sa position active, le déplacement de la poignée 6A de sa première vers sa deuxième position entraîne un déplacement de la deuxième pièce de transmission 11 relativement au couvercle 3, ladite première pièce de transmission 11 entraînant quant à elle en déplacement la première pièce de transmission 8 (c'est-à-dire que dans ce cas il n'existe sensiblement pas de déplacement relatif entre la première et la deuxième pièce de transmission 8, 11, qui se déplacent ensemble comme si elles étaient formées par une seule et même pièce dont le déplacement est commandé par le déplacement de la poignée 6A).

Avantageusement, le mécanisme de transmission pour transformer le mouvement de la poignée 6A en mouvement du moyen de verrouillage / déverrouillage 4 comprend au moins une pièce élastique 16 interposée entre les première et deuxième pièces de transmission 8, 11, la raideur de ladite pièce élastique 16 étant choisie pour que :
- lorsque le moyen de sécurité à l'ouverture 7 n'occupe pas sa position active et que la poignée 6A est déplacée manuellement de sa première à sa deuxième position, la deuxième pièce de transmission 11 se déplace en entraînant, par l'intermédiaire de la pièce élastique 16 qui ne se déforme sensiblement pas (et assure donc une transmission sensiblement intégrale d'effort, à la manière d'une pièce rigide), la première pièce de transmission 8 en mouvement,
- lorsque le moyen de sécurité à l'ouverture 7 occupe sa position active et que la poignée 6A est déplacée manuellement de sa première à sa deuxième position, la deuxième pièce de transmission 11 se déplace en entraînant la déformation de la pièce élastique 16, de sorte que l'effort transmis par la deuxième pièce de transmission 11 sur la première pièce de transmission 8, laquelle est immobilisée par le moyen de sécurité à l'ouverture 7, est limitée mécaniquement par la raideur de la pièce élastique 16.

De ce point de vue, le mécanisme de transmission comprend un limiteur d'effort mécanique, qui permet de limiter l'effort perçu par la première pièce de transmission 8 (et donc par le moyen de sécurité à l'ouverture 7 contre lequel vient presser la première pièce de transmission 8) à la force minimale qu'il faut appliquer pour déformer la pièce élastique 16.

Dans le cas illustré aux figures, la pièce élastique 16 est avantageusement constituée de deux ressorts hélicoïdaux distincts 16A, 16B disposés de telle sorte que leur axe d'extension longitudinale soit sensiblement parallèle à l'axe de translation W-W'.

L'invention n'est cependant absolument pas limitée à la mise en oeuvre d'un débrayage réalisé à l'aide d'une pièce élastique, bien qu'une telle solution présente en outre l'avantage de procurer une limitation d'effort comme exposé dans ce qui précède, tout en étant extrêmement simple, fiable et bon marché. Il est par exemple envisageable, à titre alternatif, de recourir à un système mécanique non souple, basé par exemple sur des systèmes d'articulation, et conçu pour permettre une transmission d'effort entre la deuxième pièce de transmission 11 et la première pièce de transmission 8 lorsque le moyen de sécurité 7 n'occupe pas sa position active, de telle sorte que les première et deuxième pièces de transmission 8, 11 se comportent alors comme un sous-ensemble unitaire (sans déplacement relatif) et supprimer cette transmission d'effort lorsque le moyen de sécurité 7 se trouve en dehors de sa position active, de telle sorte que le déplacement de l'organe de commande 6 entraîne le déplacement de la deuxième pièce de transmission 11 sans que cette dernière n'entraîne cette fois en déplacement la première pièce de transmission 8.

Le fonctionnement de la variante illustrée aux figures va maintenant être brièvement décrit.

Tout d'abord, l'appareil 1 est en configuration de cuisson, c'est-à-dire que son couvercle 3 est rapporté et verrouillé, grâce aux moyens de verrouillage / déverrouillage 4, sur la cuve 2. Dans cette configuration illustrée aux figures 1, 4 et 5, l'organe de commande 6 se trouve dans sa première position.

Pendant la cuisson, le doigt de sécurité 7 se trouve en position haute comme illustré à la figure 3. A la fin du cycle de cuisson, une fois que l'appareil 1 est dépressurisé par tout moyen connu, le doigt de sécurité 7A retombe, sous l'effet de son propre poids, dans sa position basse inactive. Il est alors possible à l'utilisateur de ramener la poignée 6A dans sa deuxième position (correspondant au déverrouillage du couvercle) par pivotement selon une course angulaire de 90 degrés autour de l'axe de pivotement Y-Y'.

La rotation de la poignée 6A entraîne la rotation concomitante de la paire de cames 12, 13. Chaque came 12, 13 vient ainsi pousser simultanément, par l'intermédiaire des suiveurs de came 14, 15, sur la deuxième pièce de transmission 11. Cette dernière entraîne elle-même en déplacement, par l'intermédiaire des ressorts 16A, 16B qui ne se déforment pas (car leur raideur est suffisamment importante par rapport aux frottements s'opposant au glissement de la première pièce de transmission 8), la première pièce de transmission 8, laquelle est libre de coulisser puisque le moyen de sécurité 7 n'occupe pas sa position active.

Si toutefois l'utilisateur tentait de déverrouiller le couvercle 3 alors que la pression régnant dans l'appareil est encore trop élevée, de sorte que le doigt de sécurité 7A se trouve dans sa position haute (correspondant à la position active), alors l'utilisateur parviendrait, au prix d'un effort important, qui est ressenti comme supérieur à celui qu'il faut exercer pour un déverrouillage dans des conditions normales (*i.e*. lorsque la pression est en dessous du niveau prédéterminé de sécurité), à repousser la deuxième pièce de transmission 11 en comprimant les ressorts 16A, 16B, la première pièce de transmission 8 étant immobilisée contre le doigt de sécurité 7A en position haute. Grâce à cette caractéristique, l'utilisateur ne risque pas de briser des pièces en exerçant un effort intempestif, il est au contraire autorisé à opérer un déplacement de la poignée 6A tout à fait semblable à celui qu'il est possible d'opérer pour déverrouiller l'appareil, à la différence près que ce déplacement conduit simplement à déformer les ressorts 16A, 16B, lesquels absorbent ainsi d'une certaine manière l'effort intempestif et ne le transmettent pas à la première pièce de transmission 8. De cette façon, la première pièce de transmission 8 et le moyen de sécurité 7 ne perçoivent qu'un effort minimal correspondant à l'effort nécessaire à la déformation des ressorts 16A, 16B. Le doigt de sécurité 7A n'est donc soumis qu'à une valeur de contrainte définie par le tarage des ressorts 16A, 16B, valeur qui est largement inférieure à celle que pourrait développer l'utilisateur.

Ce principe d'organe de commande débrayable permet de calibrer l'effort subi par le mécanisme de transmission lors d'une tentative de déverrouillage de l'appareil 1 alors que ce dernier est sous pression. Ceci apporte deux avantages principaux, savoir l'utilisation de matériaux standard pour la réalisation des différentes pièces, et en particulier du doigt de sécurité 7A, et la possibilité de mettre en oeuvre un organe de commande du verrouillage / déverrouillage qui procure une démultiplication importante de l'effort pratiquée par l'utilisateur, de sorte que l'appareil 1 est plus ergonomique, sans pour autant que les efforts exercés sur les dispositifs de sécurité soient augmentés.

### POSSIBILITE D'APPLICATION INDUSTRIELLE

L'invention trouve son application industrielle dans la conception, la fabrication et l'utilisation d'appareils de cuisson d'aliments sous pression.

## Revendications

1. Appareil (1) de cuisson d'aliments sous pression comprenant :
- une cuve (2) et un couvercle (3),
- un organe de commande (6) du verrouillage/déverrouillage du couvercle (3) relativement à la cuve (2), mobile entre une première et une deuxième position,
- et un moyen de sécurité à l'ouverture (7), susceptible d'occuper une position active dans laquelle il empêche le déverrouillage du couvercle (3),
ledit appareil (1) étant conçu pour que lorsque le moyen de sécurité (7) à l'ouverture n'occupe pas sa position active, le passage dudit organe de commande (6) de sa première à sa deuxième position entraîne le déverrouillage du couvercle (3), ledit appareil (1) étant **caractérisé en ce que** l'organe de commande (6) est débrayable, de façon que lorsque le moyen de sécurité à l'ouverture (7) occupe sa position active, l'organe de commande (6) peut passer de sa première à sa deuxième position sans entraîner le déverrouillage du couvercle (3).

2. Appareil (1) selon la revendication 1 **caractérisé en ce qu'**il comprend un moyen de verrouillage / déverrouillage (4) monté mobile sur le couvercle (3) entre une position de verrouillage du couvercle (3) relativement à la cuve (2) et une position de déverrouillage du couvercle (3) relativement à la cuve (2).

3. Appareil (1) selon la revendication 2 **caractérisé en ce que** le moyen de verrouillage / déverrouillage (4) est monté mobile en translation sur le couvercle (3).

4. Appareil (1) selon l'une des revendications 1 à 3 **caractérisé en ce que** l'organe de commande du verrouillage / déverrouillage (6) comprend une poignée (6A) déplaçable manuellement entre lesdites première et deuxième positions.

5. Appareil (1) selon la revendication 4 **caractérisé en ce que** ladite poignée (6A) est montée mobile à rotation sur le couvercle (3).

6. Appareil (1) selon les revendications 2 et 4 **caractérisé en ce que** l'organe de commande (6) du verrouillage / déverrouillage comprend un mécanisme de transmission pour transformer le mouvement de la poignée (6A) en mouvement du moyen de verrouillage / déverrouillage (4).

7. Appareil (1) selon la revendication 6 **caractérisé en ce que** le mécanisme de transmission comprend d'une part une première pièce de transmission (8) mobile conçue pour commander le déplacement du moyen de verrouillage / déverrouillage (4), et d'autre part une deuxième pièce de transmission (11) mobile dont le déplacement est commandé par le déplacement de la poignée (6A), ladite deuxième pièce de transmission (11) coopérant avec la poignée (6A) et la première pièce de transmission (8) de façon que lorsque le moyen de sécurité à l'ouverture (7) occupe sa position active, le déplacement de la poignée (6A) de sa première vers sa deuxième position entraîne un déplacement de la deuxième pièce de transmission (11) relativement à la première pièce de transmission (8), cette dernière restant sensiblement immobile relativement au couvercle (3).

8. Appareil (1) selon la revendication 7 **caractérisé en ce que** ladite première pièce de transmission (8) est mobile entre des positions de fermeture et d'ouverture correspondant respectivement aux positions de verrouillage et de déverrouillage du moyen de verrouillage / déverrouillage (4), ladite première pièce de transmission (8) coopérant avec le moyen de sécurité à l'ouverture (7) de façon que ce dernier s'oppose, lorsqu'il occupe sa position active, à l'atteinte par la première pièce de transmission (8) de sa position d'ouverture à partir de sa position de fermeture.

9. - Appareil selon la revendication 7 ou 8 **caractérisé en ce que** le mécanisme de transmission comprend au moins une pièce élastique (16) interposée entre les première et deuxième pièces de transmission, la raideur de ladite pièce élastique (16) étant choisie pour que :
- lorsque le moyen de sécurité à l'ouverture (7) n'occupe pas sa position active et que la poignée (6A) est déplacée manuellement de sa première à sa deuxième position, la deuxième pièce de transmission (11) se déplace en entraînant, par l'intermédiaire de la pièce élastique (16) qui ne se déforme sensiblement pas, la première pièce de transmission (8) en mouvement,
- lorsque le moyen de sécurité à l'ouverture (7) occupe sa position active et que la poignée (6A) est déplacée manuellement de sa première à sa deuxième position, la deuxième pièce de transmission (11) se déplace en entraînant la déformation de la pièce élastique (16).

10. Appareil selon l'une des revendications 6 à 9 **caractérisé en ce que** le mécanisme de transmission comprend un limiteur d'effort mécanique.

11. Appareil selon l'une des revendications 7 à 9 **caractérisé en ce que** la première et/ou la deuxième pièce de transmission (8, 11) est (sont) monté(es) mobile(s) à translation sur le couvercle (3).

12. Appareil selon l'une des revendications 1 à 11 **caractérisé en ce que** le moyen de sécurité à l'ouverture (7) est sensible à la pression et/ou à la température.

13. Appareil (1) selon la revendication 12 **caractérisé en ce que** le moyen de sécurité à l'ouverture (7) comprend un doigt de sécurité (7A) monté mobile sur le couvercle (3) entre une position haute correspondant à la position active et une position basse de rappel, ledit doigt (7A) étant conçu pour atteindre sa position haute dès que la pression régnant au sein de l'appareil atteint un niveau prédéterminé.

## Patentansprüche

1. Druckkochgerät (1) für Nahrungsmittel, umfassend:
- einen Behälter (2) und einen Deckel (3),
- ein Element (6) zur Steuerung der Verriegelung/Entriegelung des Deckels (3) in Bezug zum Behälter (2), das zwischen einer ersten und einer zweiten Position beweglich ist,
- und ein Sicherungsmittel (7) gegen Öffnen, das geeignet ist, eine aktive Position einzunehmen, in der es die Entriegelung des Deckels (3) verhindert,
wobei das Gerät (1) derart ausgeführt ist, dass, wenn das Sicherungsmittel (7) gegen Öffnen nicht seine aktive Position einnimmt, der Übergang des Steuerelements (6) von seiner ersten in seine zweite Position zur Entriegelung des Deckels (3) führt, wobei das Gerät (1) **dadurch gekennzeichnet ist, dass** das Steuerelement (6) entkuppelbar ist, so dass, wenn das Sicherungsmittel (7) gegen Öffnen seine aktive Position einnimmt, das Steuerelement (6) von seiner ersten in seine zweite Position übergehen kann, ohne zur Entriegelung des Deckels (3) zu führen.

2. Gerät (1) nach Anspruch 1, **dadurch gekennzeichnet, dass** es ein Verriegelungs-/Entriegelungsmittel (4) umfasst, das auf dem Deckel (3) zwischen einer Verriegelungsposition des Deckels (3) in Bezug zum Behälter (2) und einer Entriegelungsposition des Deckels (3) in Bezug zum Behälter (2) beweglich montiert ist.

3. Gerät (1) nach Anspruch 2, **dadurch gekennzeichnet, dass** das Verriegelungs-/Entriegelungsmittel (4) in Translation beweglich auf dem Deckel (3) montiert ist.

4. Gerät (1) nach einem der Ansprüche 1 bis 3, **dadurch gekennzeichnet, dass** das Element zur Steuerung der Verriegelung/Entriegelung (6) einen Griff (6A) umfasst, der manuell zwischen der ersten und zweiten Position verschiebbar ist.

5. Gerät (1) nach Anspruch 4, **dadurch gekennzeichnet, dass** der Griff (6A) drehbeweglich auf dem Deckel (3) montiert ist.

6. Gerät (1) nach den Ansprüchen 2 und 4, **dadurch gekennzeichnet, dass** das Element (6) zur Steuerung der Verriegelung/Entriegelung einen Übertragungsmechanismus umfasst, um die Bewegung des Griffes (6A) in eine Bewegung des Verriegelungs-/Entriegelungsmittels (4) umzusetzen.

7. Gerät (1) nach Anspruch 6, **dadurch gekennzeichnet, dass** der Übertragungsmechanismus einerseits ein erstes bewegliches Übertragungsteil (8), das derart ausgeführt ist, dass es die Verschiebung des Verriegelungs-/Entriegelungsmittels (4) steuert, und andererseits ein zweites bewegliches Übertragungsteil (11) umfasst, dessen Verschiebung durch die Verschiebung des Griffes (6A) gesteuert wird, wobei das zweite Übertragungsteil (11) mit dem Griff (6A) und dem ersten Übertragungsteil (8) zusammenwirkt, so dass, wenn das Sicherungsmittel (7) gegen Öffnen seine aktive Position einnimmt, die Verschiebung des Griffes (6A) von seiner ersten in seine zweite Position zu einer Verschiebung des zweiten Übertragungsteils (11) in Bezug zum ersten Übertragungsteil (8) führt, wobei dieses letztgenannte im Wesentlichen in Bezug zum Deckel (3) unbeweglich bleibt.

8. Gerät (1) nach Anspruch 7, **dadurch gekennzeichnet, dass** das erste Übertragungsteil (8) zwischen Verschluss- und Öffnungspositionen beweglich ist, die jeweils den Verriegelungs- und Entriegelungspositionen des Verriegelungs-/Entriegelungsmittels (4) entsprechen, wobei das erste Übertragungsteil (8) mit dem Sicherungsmittel (7) gegen Öffnen zusammenwirkt, so dass sich dieses letztgenannte, wenn es seine aktive Position einnimmt, dem Erreichen seiner Öffnungsposition aus seiner Verschlussposition durch das erste Übertragungsteil (8) widersetzt.

9. Gerät nach Anspruch 7 oder 8, **dadurch gekennzeichnet, dass** der Übertragungsmechanismus mindestens ein elastisches Teil (16) umfasst, das zwischen den ersten und zweiten Übertragungsteilen eingesetzt ist, wobei die Steifigkeit dieses elastischen Teils (16) derart gewählt ist, dass:
- wenn das Sicherungsmittel (7) gegen Öffnen nicht seine aktive Position einnimmt und der Griff (6A) manuell von seiner ersten in seine zweite Position verschoben wird, sich das zweite Übertragungsteil (11) verschiebt, wobei es mit Hilfe des elastischen Teils (16), das sich im Wesentlichen nicht verformt, das erste Übertragungsteil (8) in der Bewegung mitnimmt,
- wenn das Sicherungsmittel (7) gegen Öffnen seine aktive Position einnimmt und der Griff (6A) manuell von seiner ersten in seine zweite Position verschoben wird, sich das zweite Übertragungsteil (11) verschiebt, wobei es zur Verformung des elastischen Teils (16) führt.

10. Gerät nach einem der Ansprüche 6 bis 9, **dadurch gekennzeichnet, dass** der Übertragungsmechanismus einen mechanischen Kraftbegrenzer umfasst.

11. Gerät nach einem der Ansprüche 7 bis 9, **dadurch gekennzeichnet**, das das erste und/oder das zweite Übertragungsteil (8, 11) in Translation beweglich auf dem Deckel (3) montiert ist (sind).

12. Gerät nach einem der Ansprüche 1 bis 11, **dadurch gekennzeichnet, dass** das Sicherungsmittel (7) gegen Öffnen für Druck und/oder Temperatur empfindlich ist.

13. Gerät (1) nach Anspruch 12, **dadurch gekennzeichnet, dass** das Sicherungsmittel (7) gegen Öffnen einen Sicherungsfinger (7A) umfasst, der beweglich auf dem Deckel (3) zwischen einer oberen Position, die der aktiven Position entspricht, und einer unteren Rückstellposition montiert ist, wobei der Finger (7A) derart ausgeführt ist, dass er seine obere Position erreicht, sobald der in dem Gerät herrschende Druck ein vorbestimmtes Niveau erreicht.

## Claims

1. Appliance (1) for cooking food under pressure, comprising:
- a vessel (2) and a lid (3),
- a member (6) controlling the locking/unlocking of the lid (3) in relation to the vessel (2), able to move between a first position and a second position,
- and an opening-safety means (7), able to occupy an active position in which it prevents unlocking of the lid (3),
said appliance (1) being designed so that, when the opening-safety means (7) is not occupying its active position, the passage of said control member (6) from its first position to its second position causes the unlocking of the lid (3), said appliance (1) being **characterised in that** the control member (6) is disengageable so that, when the opening-safety means (7) is occupying its active position, the control member (6) can pass from its first position to its second position without causing the unlocking of the lid (3).

2. Appliance (1) according to claim 1, **characterised in that** it comprises a locking/unlocking means (4) mounted so as to be able to move on the lid (3) between a position of locking the lid (3) in relation to the vessel (2) and a position of unlocking the lid (3) in relation to the vessel (2).

3. Appliance (1) according to claim 2, **characterised in that** the locking/unlocking means (4) is mounted so as to be able to move in translation on the lid (3).

4. Appliance (1) according to one of claims 1 to 3, **characterised in that** the member (6) for controlling the locking/unlocking comprises a handle (6A) able to be moved manually between said first and second positions.

5. Appliance (1) according to claim 4, **characterised in that** said handle (6A) is mounted so as to be able to rotate on the lid (3).

6. Appliance (1) according to claims 2 and 4, **characterised in that** the member (6) controlling the locking/unlocking comprises a transmission mechanism for converting the movement of the handle (6A) into a movement of the locking/unlocking means (4).

7. Appliance (1) according to claim 6, **characterised in that** the transmission mechanism comprises firstly a first movable transmission piece (8) designed to control the movement of the locking/unlocking means (4), and secondly a second movable transmission piece (11), the movement of which is controlled by the movement of the handle (6A), said second transmission piece (11) cooperating with the handle (6A) and the first transmission piece (8) so that, when the opening-safety means (7) is occupying its active position, the movement of the handle (6A) from its first position to its second position causes a movement of the second transmission piece (11) in relation to the first transmission piece (8), the latter remaining substantially immobile in relation to the lid (3).

8. Appliance (1) according to claim 7, **characterised in that** said first transmission piece (8) is able to move between closing and opening positions corresponding respectively to the locking and unlocking positions of the locking/unlocking means (4), said first transmission piece (8) cooperating with the opening-safety means (7) so that the latter, when it is occupying its active position, opposes the reaching by the first transmission piece (8) of its opening position from its closed position.

9. Appliance according to claims 7 or 8, **characterised in that** the transmission mechanism comprises at least one elastic piece (16) interposed between the first and second transmission pieces, the stiffness of said elastic piece (16) being chosen so that:
- when the opening-safety means (7) is not occupying its active position and the handle (6A) is moved manually from its first position to its second position, the second transmission piece (11) moves while moving the first transmission piece (8) by means of the elastic piece (16), which substantially does not deform,
- when the opening-safety means (7) is occupying its active position and the handle (6A) is moved manually from its first position to its second position, the second transmission piece (11) moves while causing the deformation of the elastic piece (16).

10. Appliance (1) according to one of claims 6 to 9, **characterised in that** the transmission mechanism comprises a mechanical-force limiter.

11. Appliance (1) according to one of claims 7 to 9, **characterised in that** the first and/or second transmission piece (8, 11) is (are) mounted so as to be able to move in translation on the lid (3).

12. Appliance (1) according to one of claims 1 to 11, **characterised in that** the opening-safety means (7) is sensitive to pressure and/or temperature.

13. Appliance (1) according to claim 12, **characterised in that** the opening-safety means (7) comprises a safety finger (7A) mounted so as to be able to move on the lid (3) between a high position corresponding to the active position and a low return position, said finger (7A) being designed so as to reach its high position as soon as the pressure prevailing in the appliance reaches a predetermined level.
